# EUROPEAN PATENT APPLICATION

(11) **EP 2 227 027 A2**
(43) Date of publication of application: **08.09.2010**
(21) Application number: 10154535.8
(22) Date of filing: 24.02.2010
(51) Int. Cl.: H04N 13/00, G02B 27/22

(54) **Three-dimensional (3D) color display system**

(30) Priority: 04.03.2009 US 209308 P
(71) Applicant: JDS Uniphase Corporation, Milpitas, CA 95035 (US)
(72) Inventor: Ockenfuss, Georg J., Santa Rosa, CA 95404 (US)
(74) Representative: Harrison Goddard Foote

(57) **Abstract**

The present invention provides a three-dimensional (3D) color display system, and a backlight for a liquid-crystal display (LCD) panel in such a 3D color display system. The backlight comprises a right-eye backlight module, a left-eye backlight module, and a backlight control module. The right-eye backlight module transmits a right-eye first-color band, a right-eye second-color band, and a right-eye third-color band, from which right-eye images are produced, to the LCD panel. The left-eye backlight module transmits a left-eye first-color band, a left-eye second-color band, and a left-eye third-color band, from which left-eye images are produced, to the LCD panel. The backlight control module activates the right-eye backlight module during right-eye activation intervals and the left-eye backlight module during left-eye activation intervals, the right-eye activation intervals and the left-eye activation intervals alternating at a switching rate.

## Description

### TECHNICAL FIELD OF THE INVENTION

The present invention relates to a three-dimensional (3D) color display system and, in particular, to a backlight for a liquid-crystal display (LCD) panel in a 3D color display system.

### BACKGROUND OF THE INVENTION

Three-dimensional (3D) color display systems use a variety of strategies to produce distinct images for a viewer's right eye and left eye. Among the most widespread 3D color display systems are projector-based systems using a color separation strategy to produce spectrally distinct right-eye and left-eye images, which are viewed with passive color-filter eyeglasses, as disclosed in U.S. Patent No. 6,698,890 to Jorke, issued on March 2, 2004, and in U.S. Patent No. 6,687,003 to Sorensen, et al., issued on February 3, 2004. However, the market share of projector-based systems in the home-theater category is in decline. Therefore, various attempts have been made to extend similar color separation strategies to 3D color display systems based on flat-panel displays for use in home theaters.

One example of such a 3D color display system based on a flat-panel display is disclosed in International Patent Publication No. WO 2002/071384 to Smith, published on September 12, 2002. The flat-panel display includes a liquid-crystal display (LCD) panel for producing spectrally distinct right-eye and left-eye images, which comprises right-eye red, green, blue (RGB) pixels and left-eye RGB pixels. The right-eye RGB pixels transmit a right-eye red band, a right-eye green band, and a right-eye blue band to produce right-eye images, and the left-eye RGB pixels transmit a left-eye red band, a left-eye green band, and a left-eye blue band to produce left-eye images. Unfortunately, such an LCD panel comprising right-eye RGB pixels and left-eye RGB pixels is difficult and expensive to manufacture. Furthermore, as the right-eye images are produced using only the right-eye RGB pixels, and the left-eye images are produced using only the left-eye RGB pixels, image resolution is decreased by a factor of two.

Another example of such a 3D color display system based on a flat-panel display is disclosed in U.S. Patent Application Publication No. 2008/0278574 to Ramstad, published on November 13, 2008. The flat-panel display includes a backlight and an LCD panel for producing spectrally distinct right-eye and left-eye images. The backlight comprises at least a first light source, which emits a green band, but not a yellow band, and a second light source, which emits a yellow band, but not a green band. By switching between the first light source and the second light source, the green band and the yellow band are emitted in alternation. The first light source, the second light source, or a third light source emits a red band and a blue band. The LCD panel comprises R subpixels that transmit the red band, green/yellow (G/Y) subpixels that transmit the green band and the yellow band, and B subpixels that transmit the blue band to produce right-eye images from the red band, the green band, and the blue band, and left-eye images from the yellow band. Unfortunately, such an LCD panel comprising R, G/Y, and B subpixels is difficult and expensive to manufacture. Furthermore, as the left-eye images are produced from only the G/Y pixels, a viewer's left eye receives only monochromatic image information.

### SUMMARY OF THE INVENTION

An object of the present invention is to overcome the shortcomings of the prior art by providing a simple and effective three-dimensional (3D) color display system using a color separation strategy, and a backlight for a liquid-crystal display (LCD) panel in such a 3D color display system.

Accordingly, the present invention relates to a 3D color display system comprising: a 3D color display including: an LCD panel for producing right-eye images and left-eye images in alternation at a refresh rate; and a backlight comprising: a right-eye backlight module for transmitting, upon activation, a right-eye first-color band, a right-eye second-color band, and a right-eye third-color band, from which the right-eye images are produced, to the LCD panel; a left-eye backlight module for transmitting, upon activation, a left-eye first-color band spectrally distinct from the right-eye color bands, a left-eye second-color band spectrally distinct from the right-eye color bands, and a left-eye third-color band spectrally distinct from the right-eye color bands, from which the left-eye images are produced, to the LCD panel; and a backlight control module for activating the right-eye backlight module during right-eye activation intervals and the left-eye backlight module during left-eye activation intervals, the right-eye activation intervals and the left-eye activation intervals alternating at a switching rate.

Another aspect of the present invention relates to a backlight for an LCD panel in a 3D color display system, comprising: a right-eye backlight module for transmitting a right-eye first-color band, a right-eye second-color band, and a right-eye third-color band, from which right-eye images are produced, to the LCD panel; a left-eye backlight module for transmitting a left-eye first-color band spectrally distinct from the right-eye color bands, a left-eye second-color band spectrally distinct from the right-eye color bands, and a left-eye third-color band spectrally distinct from the right-eye color bands, from which left-eye images are produced, to the LCD panel; and a backlight control module for activating the right-eye backlight module during right-eye activation intervals and the left-eye backlight module during left-eye activation intervals, the right-eye activation intervals and the left-eye activation intervals alternating at a switching rate.

### BRIEF DESCRIPTION OF THE DRAWINGS

The present invention will be described in greater detail with reference to the accompanying drawings, which represent exemplary embodiments thereof, wherein:

FIG. 1 is a schematic illustration of a top view of a three-dimensional (3D) color display system;

FIG. 2 is a block diagram of a 3D color display;

FIG. 3 is a schematic illustration of a cross-section of a liquid-crystal display (LCD) pixel;

FIG. 4 is a plot of a red, green, blue (RGB) transmission spectrum of RGB subpixel filters of an RGB LCD pixel;

FIG. 5 is a plot of a first right-eye transmission spectrum of a right-eye backlight module and a first left-eye transmission spectrum of a left-eye backlight module;

FIG. 6 is a plot of a second right-eye transmission spectrum of a right-eye backlight module and a second left-eye transmission spectrum of a left-eye backlight module;

FIG. 7 is a plot of a first right-eye passband spectrum of a right-eye color filter and a first left-eye passband spectrum of a left-eye color filter;

FIG. 8 is a plot of a second right-eye passband spectrum of a right-eye color filter and a second left-eye passband spectrum of a left-eye color filter;

FIG. 9 is a plot of a first right-eye emission spectrum of right-eye color light sources and a first left-eye emission spectrum of left-eye color light sources;

FIG. 10 is a plot of a second right-eye emission spectrum of right-eye color light sources and a second left-eye emission spectrum of left-eye color light sources;

FIG. 11 is a plot of switching sequences for a right-eye backlight module and a left-eye backlight module;

FIG. 12 is a schematic illustration of a cross-section of a first preferred embodiment of a backlight in a 3D color display;

FIG. 13A is a schematic illustration of a side view of a right-eye backlight module and a left-eye backlight module disposed in a checkerboard pattern in the backlight of FIG. 12;

FIG. 13B is a schematic illustration of a back view of a right-eye backlight module and a left-eye backlight module disposed in a parallel pattern in the backlight of FIG. 12;

FIG. 14 is a schematic illustration of a cross-section of a second preferred embodiment of a backlight in a 3D color display;

FIG. 15A is a schematic illustration of a front view of a right-eye backlight module and a left-eye backlight module disposed in a checkerboard pattern in the backlight of FIG. 14;

FIG. 15B is a schematic illustration of a front view of a right-eye backlight module and a left-eye backlight module disposed in a parallel pattern in the backlight of FIG. 14;

FIG. 16 is a schematic illustration of a cross-section of a third preferred embodiment of backlight in a 3D color display;

FIG. 17 is a schematic illustration of a cross-section of a fourth preferred embodiment of backlight in a 3D color display;

FIG. 18 is a plot of a right-eye throughput spectrum and a left-eye throughput spectrum of a 3D color display system; and

FIG. 19 is a plot of a right-eye crosstalk spectrum and a left-eye crosstalk spectrum of a 3D color display system.

### DETAILED DESCRIPTION OF THE INVENTION

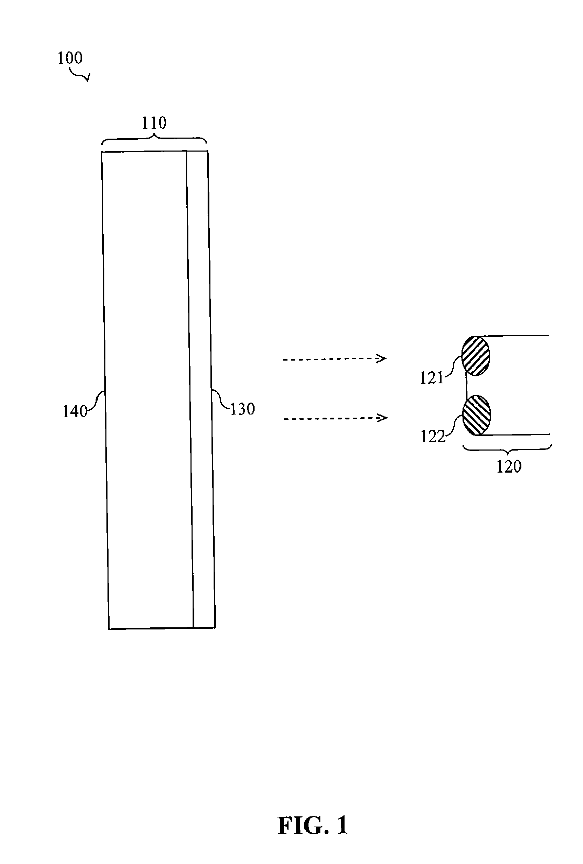

With reference to FIG. 1, the present invention provides a three-dimensional (3D) color display system 100 using a color separation strategy, for application in home theaters, video game systems, and the like. The 3D color display system 100 comprises a 3D color display 110 for displaying spectrally distinct right-eye and left-eye images in alternation, which are viewed using 3D color eyeglasses 120.

Advantageously, the 3D color display 110 is also capable of functioning as a two-dimensional (2D) color display, without making any physical changes to the 3D color display 110. Use of the 3D color eyeglasses 120 is unnecessary when the 3D color display 110 functions as a 2D color display.

The 3D color display 110 is a flat-panel liquid-crystal display (LCD). Preferably, the 3D color display 110 is an active-matrix LCD, such as a thin-film transistor (TFT) LCD. The 3D color display 110 may be a twisted nematic (TN) LCD, an in-plane switching (IPS) LCD, a vertically aligned (VA) LCD, or any other suitable type of LCD.

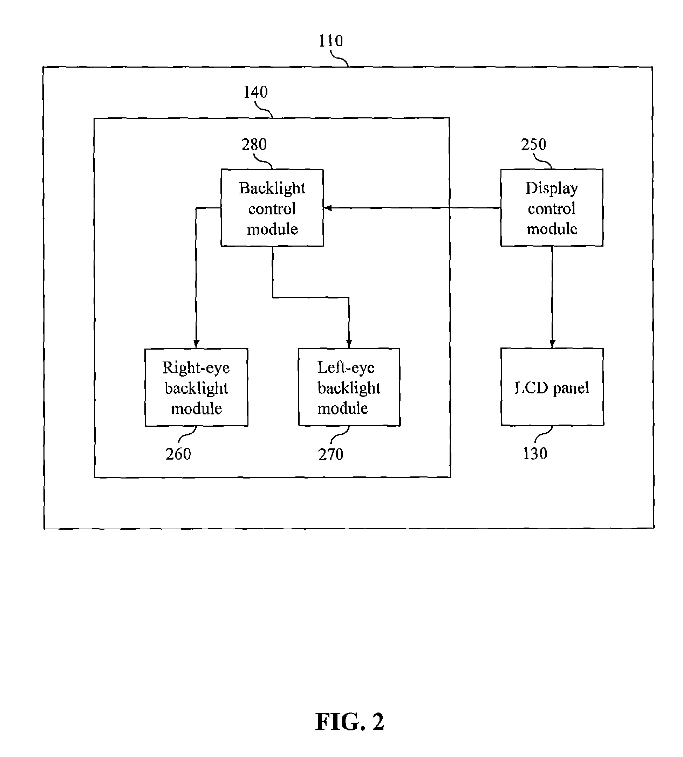

With reference to FIG. 2, the 3D color display 110 includes an LCD panel 130 for producing the right-eye and left-eye images in alternation, and a display control module 250 for controlling the LCD panel 130. Specifically, the display control module 250 provides right-eye and left-eye image information to the LCD panel 130 in alternation at a refresh rate of the LCD panel 130. Using the right-eye and left-eye image information, the right-eye and left-eye images are produced by the LCD panel 130 in alternation at the refresh rate. Preferably, the refresh rate is at least 120 Hz. The display control module 250 also synchronizes a backlight control module 280 with the provision of the right-eye and left-eye image information to the LCD panel 130.

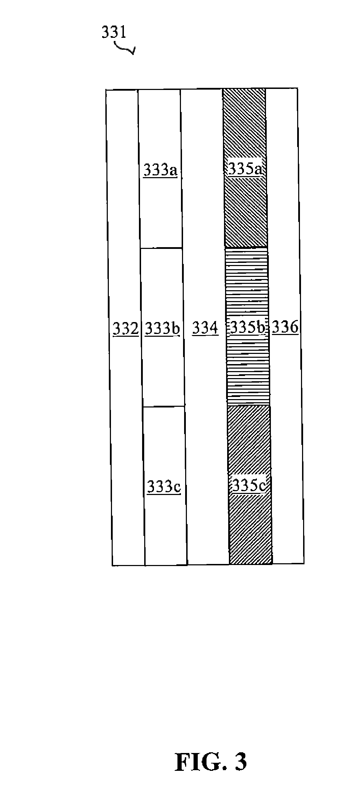

With reference to FIG. 3, the LCD panel 130 comprises a plurality of LCD pixels 331. Preferably, the 3D color display 110 is a 1080p display, for example, having a 16:9 aspect ratio and a resolution of 1920 x 1080 pixels. Each LCD pixel 331 comprises subpixels of primary colors, namely, a first-color subpixel, a second-color subpixel, and a third-color subpixel. A back polarization filter 332, a liquid-crystal layer 334, and a front polarization filter 336 are common to the color subpixels. Each color subpixel also includes an individual subpixel TFT 333a, 333b, or 333c for selectively varying a transmission level of the color subpixel, as well as an individual color subpixel filter 335a, 335b, or 335c for transmitting a broad color band. Specifically, the first-color subpixel includes a first-color subpixel filter 335a for transmitting a broad first-color band, the second-color subpixel includes a second-color subpixel filter 335b for transmitting a broad second-color band, and the third-color subpixel includes a third-color subpixel filter 335c for transmitting a broad third-color band.

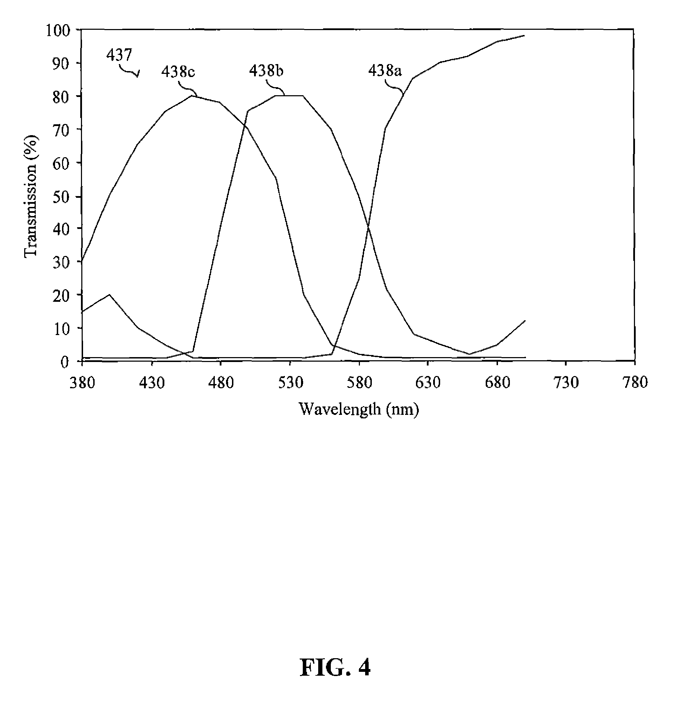

Typically, the plurality of LCD pixels 331 are conventional red, green, blue (RGB) LCD pixels, each including an R subpixel, a G subpixel, and a B subpixel. With reference to FIG. 4, the RGB LCD pixels include RGB subpixel filters having an RGB transmission spectrum 437. The R subpixel includes an R subpixel filter for transmitting a broad red band 438a, the G subpixel includes a G subpixel filter for transmitting a broad green band 438b, and the B subpixel includes a B subpixel filter for transmitting a broad blue band 438c.

In most instances, the LCD panel 130 also comprises front surface films disposed in front of the plurality of LCD pixels 331, such as anti-reflection (AR) films, anti-glare (AG) films, privacy films, and hardcoat films.

With reference again to FIG. 1, the 3D color display 110 also includes a backlight 140, disposed behind the LCD panel 130, for transmitting spectrally distinct right-eye and left-eye color bands to the LCD panel 130 in alternation. The LCD panel 130 may be edge-lit by the backlight 140, allowing a thinner design, or back-lit by the backlight 140, allowing local dimming.

Several different embodiments of the backlight 140 are provided by the present invention, all of which comprise a right-eye backlight module 260 for transmitting a right-eye first-color band, a right-eye second-color band, and a right-eye third-color band to the LCD panel 130, and a left-eye backlight module 270 for transmitting a left-eye first-color band spectrally distinct from the right-eye color bands, a left-eye second-color band spectrally distinct from the right-eye color bands, and a left-eye third-color band spectrally distinct from the right-eye color bands to the LCD panel 130.

The right-eye color bands are bands of primary colors, and the left-eye color bands are bands of similar, but spectrally distinct primary colors. The right-eye and left-eye first-color bands are spectrally distinct, but both fall within the broad first-color band transmitted by the first-color subpixel filter 335a. Likewise, the right-eye and left-eye second-color bands are spectrally distinct, but both fall within the broad second-color band transmitted by the second-color subpixel filter 335b. Also likewise, the right-eye and left-eye third-color bands are spectrally distinct, but both fall within the broad third-color band transmitted by the third-color subpixel filter 335c.

Thus, it is desirable that the right-eye and left-eye color bands have narrow spectral widths. Typically, the spectral widths of the right-eye and left-eye color bands are each less than about 100 nm. Preferably, the spectral widths of the right-eye and left-eye color bands are each less than about 75 nm. More preferably, the spectral widths of the right-eye and left-eye color bands are each less than about 50 nm.

The right-eye backlight module 260 and the left-eye backlight module 270 may have various transmission spectra, provided the right-eye and left-eye color bands are spectrally distinct. Of the numerous possibilities, two examples are described hereafter.

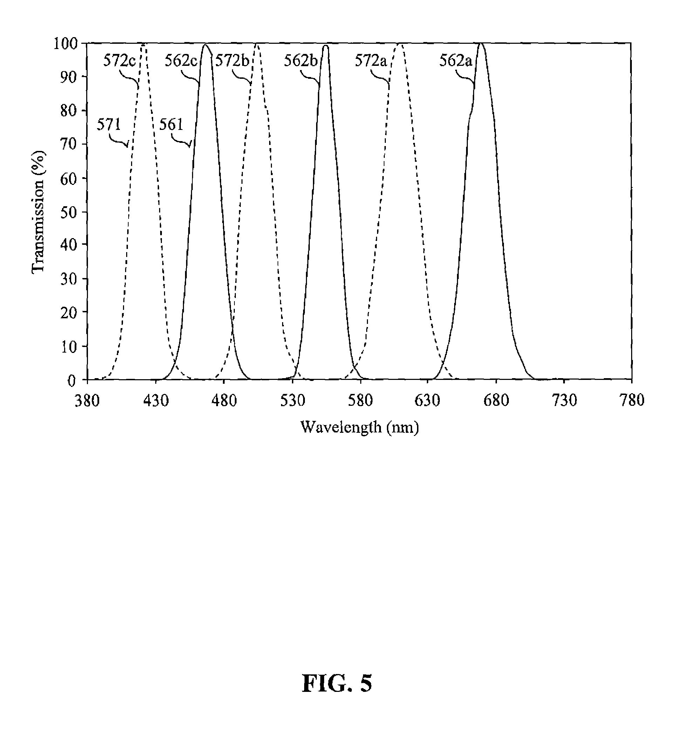

With reference to FIG. 5, in some embodiments of the backlight 140, the right-eye backlight module 260 transmits a first right-eye transmission spectrum 561 including a right-eye red band 562a having a center wavelength between 630 nm and 670 nm, a right-eye green band 562b having a center wavelength between 540 nm and 580 nm, and a right-eye blue band 562c having a center wavelength between 450 nm and 485 nm.

Accordingly, the left-eye backlight module 270 transmits a first left-eye transmission spectrum 571 including a left-eye red band 572a having a center wavelength between 590 nm and 625 nm, a left-eye green band 572b having a center wavelength between 490 nm and 530 nm, and a left-eye blue band 572c having a center wavelength between 410 nm and 445 nm.

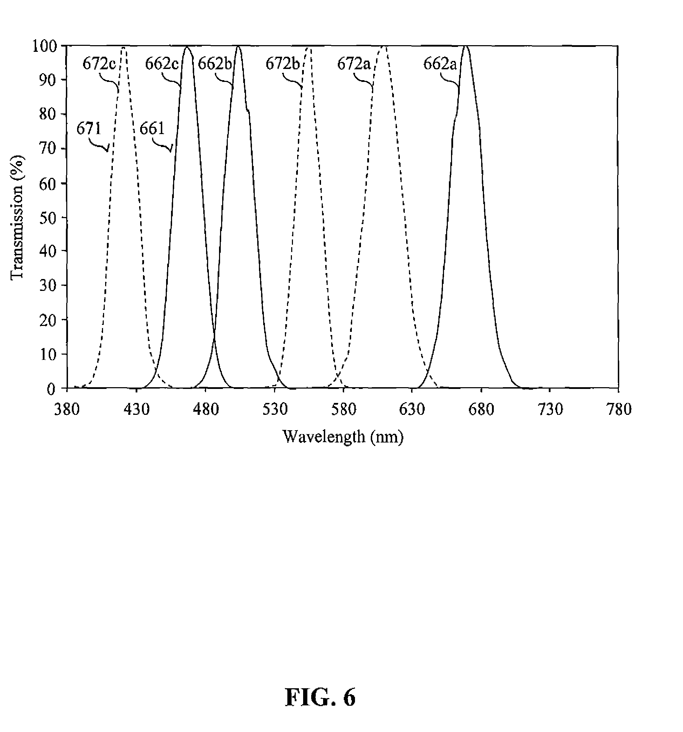

With reference to FIG. 6, in other embodiments of the backlight 140, the right-eye backlight module 260 transmits a second right-eye transmission spectrum 661 including a right-eye red band 662a having a center wavelength between 630 nm and 670 nm, a right-eye green band 662b having a center wavelength between 490 nm and 530 nm, and a right-eye blue band 662c having a center wavelength between 450 nm and 485 nm. In some instances, the right-eye green and blue bands may not be resolved, but may instead form a green-blue band having a center wavelength between 470 nm and 510 nm.

Accordingly, the left-eye backlight module 270 transmits a second left-eye transmission spectrum 671 including a left-eye red band 672a having a center wavelength between 590 nm and 625 nm, a left-eye green band 672b having a center wavelength between 540 nm and 580 nm, and a left-eye blue band 672c having a center wavelength between 410 nm and 445 nm. In some instances, the right-eye red and green bands may not be resolved, but may instead form a red-green band having a center wavelength between 560 nm and 610 nm.

The selected transmission spectra of the right-eye backlight module 260 and the left-eye backlight module 270 may be produced by various means.

In some embodiments of the backlight 140, the selected transmission spectra are produced by means of light sources and color filters. In such embodiments, the right-eye backlight module 260 includes one or more right-eye light sources for emitting light including the right-eye color bands, and one or more right-eye color filters for transmitting the right-eye color bands to the LCD panel 130 while blocking, i.e. reflecting and/or absorbing, the left-eye color bands. The left-eye backlight module 270, likewise, includes one or more left-eye light sources for emitting light including the left-eye color bands, and one or more left-eye color filters for transmitting the left-eye color bands to the LCD panel 130 while blocking the right-eye color bands.

Typically, the one or more right-eye light sources are arranged in one or more right-eye groups of one or more right-eye light sources, and the one or more left-eye light sources are arranged in one or more left-eye groups of one or more left-eye light sources. The one or more right-eye groups and the one or more left-eye groups are then disposed in an alternating pattern, such as a checkerboard pattern or a parallel pattern, e.g. horizontal or vertical stripes, and the one or more right-eye color filters and the one or more left-eye color filters are disposed in front of the one or more right-eye groups and the one or more left-eye groups in a corresponding alternating pattern The one or more right-eye color filters and the one or more left-eye color filters may be formed as a monolithic film or may be formed as separate films.

In some instances, a collimating lens, such as a Fresnel lens film, may be disposed between the light sources and the color filters.

Preferably, the one or more right-eye light sources and the one or more left-eye light sources are white light-emitting diodes (LEDs) or RGB LEDs. LEDs are particularly advantageous as light sources because of their high switching speeds. Furthermore, the use of LEDs allows local dimming to achieve high dynamic contrast ratios, for example, greater than 1 000 000:1.

Alternatively, the one or more right-eye light sources and the one or more left-eye light sources may be any other suitable fast-switching light sources, such as RGB solid-state lasers.

Preferably, the one or more right-eye color filters transmit greater than 75 % of the right-eye color bands and less than 5 % of the left-eye color bands. More preferably, the one or more right-eye color filters transmit greater than 80 % of the right-eye color bands and less than 2 % of the left-eye color bands. Most preferably, the one or more right-eye color filters transmit greater than 90 % of the right-eye color bands and less than 1 % of the left-eye color bands.

Likewise, the one or more left-eye color filters, preferably, transmit greater than 75 % of the left-eye color bands and less than 5 % of the right-eye color bands. More preferably, the one or more left-eye color filters transmit greater than 80 % of the left-eye color bands and less than 2 % of the right-eye color bands. Most preferably, the one or more left-eye color filters transmit greater than 90 % of the left-eye color bands and less than 1 % of the right-eye color bands.

Ideally, the one or more right-eye color filters and the one or more left-eye color filters have passband spectra with sharp transitions between passbands and blockbands.

Typically, the one or more right-eye color filters and the one or more left-eye color filters are interference filters. Preferably, the one or more right-eye color filters and the one or more left-eye color filters are triple-bandpass filters.

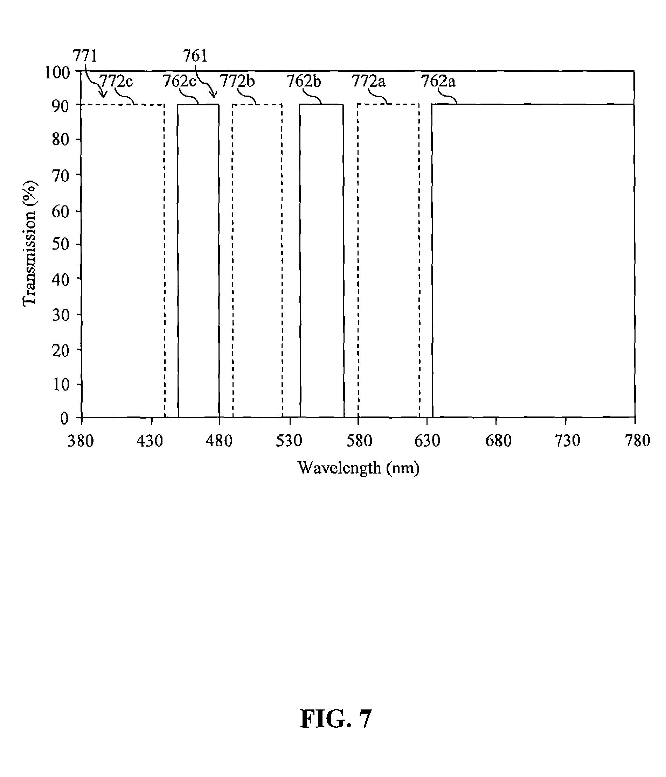

For example, with reference to FIG. 7, the one or more right-eye color filters may be one or more triple-bandpass filters having a first right-eye passband spectrum 761 for transmitting the first right-eye transmission spectrum 561, including a right-eye red passband 762a above about 630 nm, a right-eye green passband 762b between about 530 nm and 580 nm, and a right-eye blue passband 762c between about 440 nm and 485 nm.

Accordingly, the one or more left-eye color filters may be one or more triple-bandpass filters having a first left-eye passband spectrum 771 for transmitting the first left-eye transmission spectrum 571, having a left-eye red passband 772a between about 580 nm and 630 nm, a left-eye green passband 772b between about 485 nm and 530 nm, and a left-eye blue passband 772c below about 440 nm.

Alternatively, the one or more right-eye color filters and the one or more left-eye color filters may be double-bandpass filters.

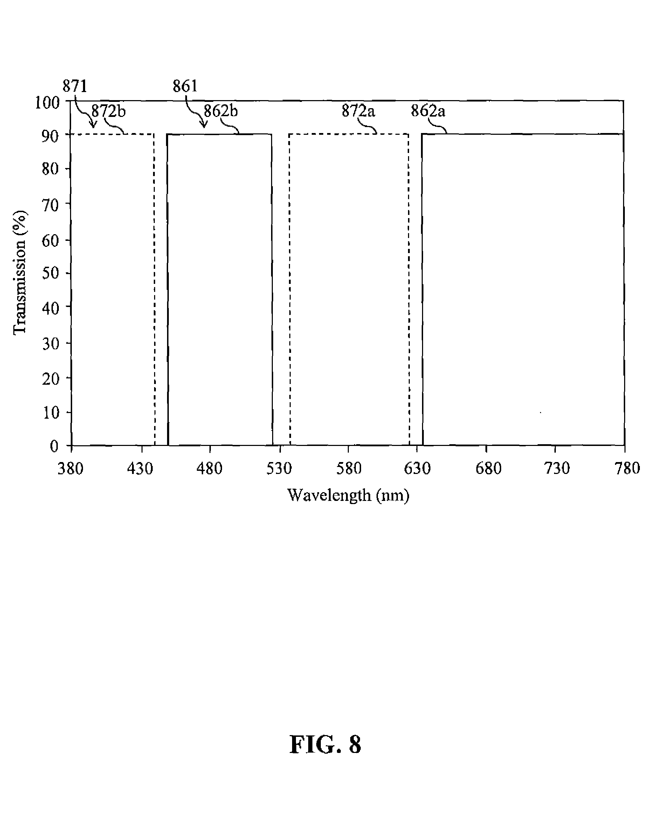

For another example, with reference to FIG. 8, the one or more right-eye color filters may be one or more double-bandpass filters having a second right-eye passband spectrum 861 for transmitting the second right-eye transmission spectrum 661, having a right-eye red passband 862a above about 630 nm, and a right-eye green-blue passband 862b between about 440 nm and 530 nm.

Accordingly, the one or more left-eye color filters may be one or more double-bandpass filters having a second left-eye passband spectrum 871 for transmitting the second left-eye transmission spectrum 671, having a left-eye red-green passband 872a between about 530 nm and 630 nm, and a left-eye blue passband 872b below about 440 nm.

As another alternative, the one or more right-eye color filters and the one or more left-eye color filters may be sets of first-color, second-color, and third-color single-bandpass filters. In instances where the one or more right-eye light sources and the one or more left-eye light sources are RGB LEDs or RGB solid-state lasers, the one or more right-eye color filters and the one or more left-eye color filters may be sets of red, green, and blue single-bandpass filters, each single-bandpass filter being disposed over the correspondingly colored LED or solid-state laser.

Ideally, the RGB LEDs or RGB solid-state lasers are selected such that color filters are not required, as described hereafter.

In other embodiments of the backlight 140, the selected transmission spectra are produced by means of color light sources. In such embodiments, the right-eye backlight module 260 includes one or more right-eye first-color light sources for emitting only the right-eye first-color band and for transmitting the right-eye first-color band to the LCD panel 130, one or more right-eye second-color light sources for emitting only the right-eye second-color band and for transmitting the right-eye second-color band to the LCD panel 130, and one or more right-eye third-color light sources for emitting only the right-eye third-color band and for transmitting the right-eye third-color band to the LCD panel 130.

In some instances, in order to improve white balancing or light throughput, the one or more right-eye first-color light sources, the one or more right-eye second-color light sources, and/or the one or more right-eye third-color light sources may include more than one type of first-color, second-color, and/or third-color light sources, respectively, for emitting first-color, second-color, and/or third color sub-bands. The first-color, second-color, and/or third color sub-bands, which have center wavelengths that are separated by between 10 nm and 25 nm, together form the right-eye first-color band, the right-eye second-color band, and/or the right-eye third-color band, respectively.

The left-eye backlight module 270, likewise, includes one or more left-eye first-color light sources for emitting only the left-eye first-color band and for transmitting the left-eye first-color band to the LCD panel 130, one or more left-eye second-color light sources for emitting only the left-eye second-color band and for transmitting the left-eye second-color band to the LCD panel 130, and one or more left-eye third-color light sources for emitting only the left-eye third-color band and for transmitting the left-eye third-color band to the LCD panel 130.

In some instances, in order to improve white balancing or light throughput, the one or more left-eye first-color light sources, the one or more left-eye second-color light sources, and/or the one or more left-eye third-color light sources may include more than one type of first-color, second-color, and/or third-color light sources, respectively, for emitting first-color, second-color, and/or third color sub-bands. The first-color, second-color, and/or third color sub-bands, which have center wavelengths that are separated by between 10 nm and 25 nm, together form the left-eye first-color band, the left-eye second-color band, and/or the left-eye third-color band, respectively.

Typically, the right-eye color light sources are arranged in one or more right-eye groups of one or more right-eye first-color light sources, one or more right-eye second-color light sources, and one or more right-eye third-color light sources, and the left-eye color light sources are arranged in one or more left-eye groups of one or more left-eye first-color light sources, one or more left-eye second-color light sources, and one or more left-eye third-color light sources. The one or more right-eye groups and the one or more left-eye groups are then disposed in an alternating pattern, such as a checkerboard pattern or a parallel pattern, e.g. horizontal or vertical stripes.

Preferably, the one or more right-eye first-color light sources and the one or more left-eye first-color light sources are first-color LEDs, the one or more right-eye second-color light sources and the one or more left-eye second-color light sources are second-color LEDs, and the one or more right-eye third-color light sources and the one or more left-eye third-color light sources are third-color LEDs.

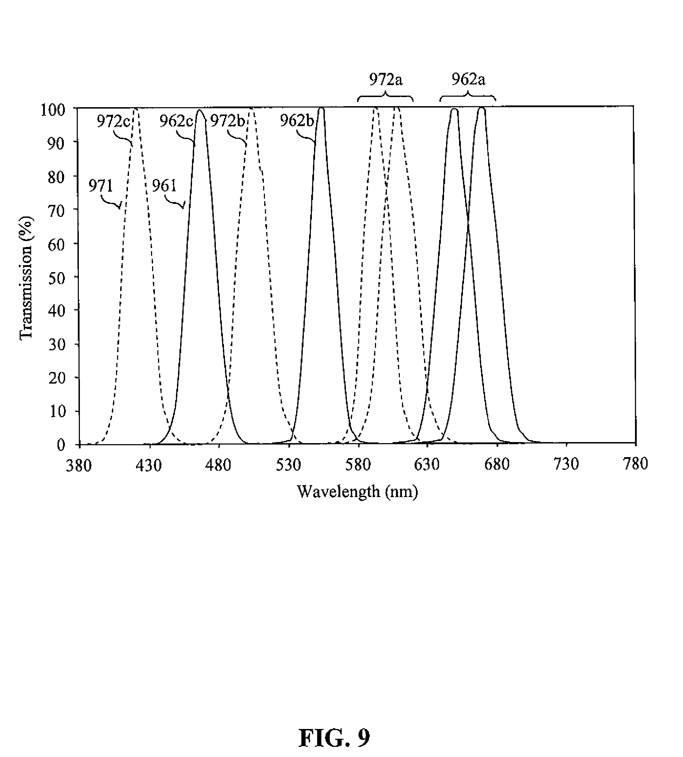

For example, with reference to FIG. 9, the right-eye color light sources may have a first right-eye emission spectrum 961 that corresponds to the first right-eye transmission spectrum 561. The one or more right-eye first-color light sources may be one or more red LEDs for emitting a right-eye red band 962a, the one or more right-eye second-color light sources may be one or more green LEDs for emitting a right-eye green band 962b, and the right-eye third-color light sources may be one or more blue LEDs for emitting a right-eye blue band 962c.

Accordingly, the left-eye color light sources may have a first left-eye emission spectrum 971 that corresponds to the first left-eye transmission spectrum 571. The one or more left-eye first-color light sources may be one or more red LEDs for emitting a left-eye red band 972a, the one or more left-eye second-color light sources may be one or more green LEDs for emitting a left-eye green band 972b, and the left-eye third-color light sources may be one or more blue LEDs for emitting a left-eye blue band 972c.

As mentioned heretofore, the one or more right-eye or left-eye color light sources of any color may include one or more color LEDs of a first type and one or more color LEDs of a second type for emitting color sub-bands, which together form the corresponding right-eye or left-eye color band.

In the illustrated embodiment, the one or more right-eye first-color light sources include one or more red LEDs of a first type and one or more red LEDs of a second type for emitting red sub-bands, which together form the right-eye red band 962a. Accordingly, the one or more left-eye first-color light sources include one or more red LEDs of a first type and one or more red LEDs of a second type for emitting red sub-bands, which together form the left-eye red band 972a.

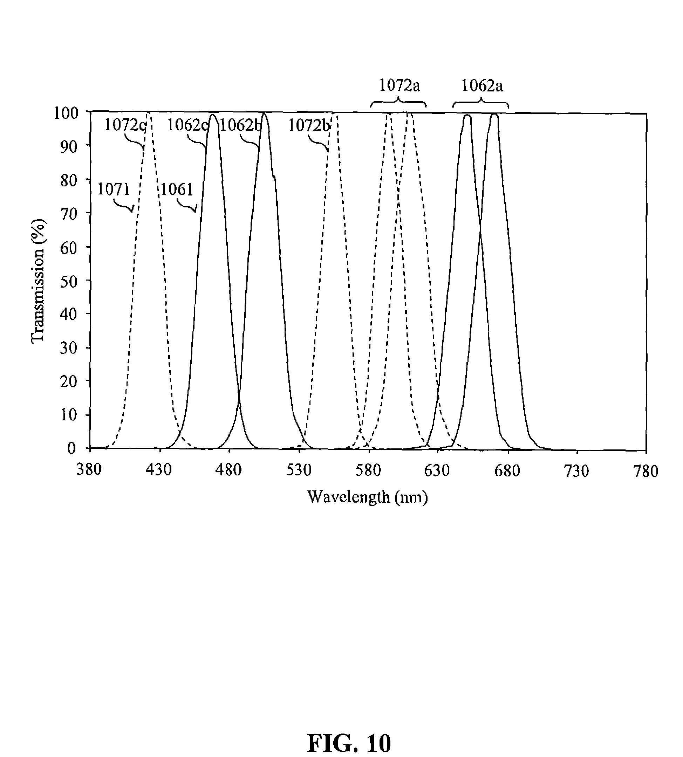

For another example, with reference to FIG. 10, the right-eye color light sources may have a second right-eye emission spectrum 1061 that corresponds to the second right-eye transmission spectrum 661. The one or more right-eye first-color light sources may be one or more red LEDs for emitting a right-eye red band 1062a, the one or more right-eye second-color light sources may be one or more green LEDs for emitting a right-eye green band 1062b, and the right-eye third-color light sources may be one or more blue LEDs for emitting a right-eye blue band 1062c.

Accordingly, the left-eye color light sources may have a second left-eye emission spectrum 1071 that corresponds to the second left-eye transmission spectrum 671. The one or more left-eye first-color light sources may be one or more red LEDs for emitting a left-eye red band 1072a, the one or more left-eye second-color light sources may be one or more green LEDs for emitting a left-eye green band 1072b, and the left-eye third-color light sources may be one or more blue LEDs for emitting a left-eye blue band 1072c.

In the illustrated embodiment, the one or more right-eye first-color light sources include one or more red LEDs of a first type and one or more red LEDs of a second type for emitting red sub-bands, which together form the right-eye red band 1062a. Accordingly, the one or more left-eye first-color light sources include one or more red LEDs of a first type and one or more red LEDs of a second type for emitting red sub-bands, which together form the left-eye red band 1072a.

Alternatively, the right-eye color light sources and the left-eye color light sources may be any other suitable color light sources, such as solid-state lasers. Solid-state lasers are particularly advantageous as light sources because of their very narrow emission spectra.

For example, the one or more right-eye first-color light sources and the one or more left-eye first-color light sources may be first-color solid-state lasers, the one or more right-eye second-color light sources and the one or more left-eye second-color light sources may be second-color solid-state lasers, and the one or more right-eye third-color light sources and the one or more left-eye third-color light sources may be third-color solid-state lasers.

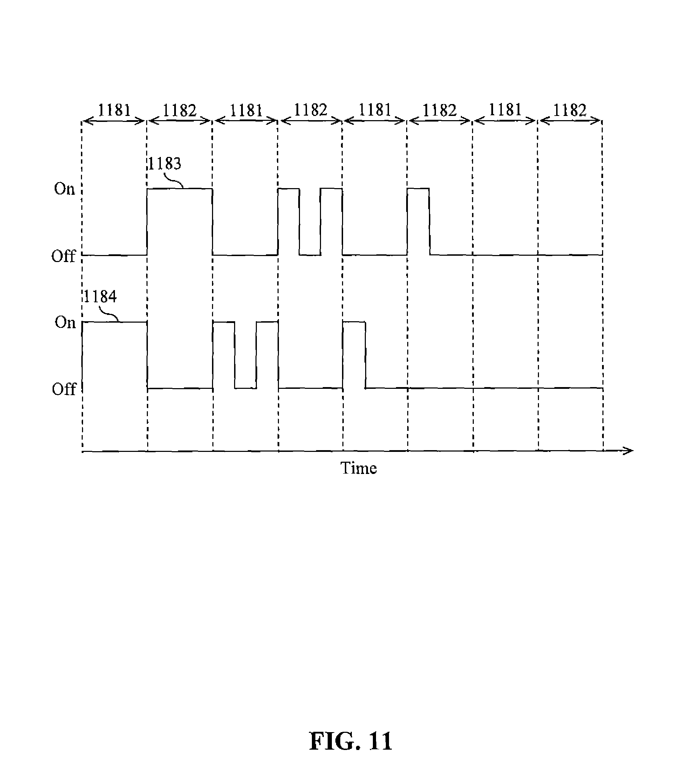

With reference again to FIG. 2, all embodiments of the backlight 140 also comprise the backlight control module 280 for controlling the right-eye backlight module 260 and the left-eye backlight module 270. Specifically, with reference to FIG. 11, the backlight control module 280 activates the right-eye backlight module 260 during right-eye activation intervals 1181 and the left-eye backlight module 270 during left-eye activation intervals 1182. The right-eye activation intervals 1181 and the left-eye activation intervals 1182, which are generally of the same duration, alternate at a switching rate, which is synchronized to the refresh rate of the LCD panel 130.

The backlight control module 280 receives the right-eye and left-eye image information from the display control module 250 in alternation, preferably, at the refresh rate. When the right-eye image information is received, the backlight control module 280 may activate the right-eye backlight module 260 to transmit the right-eye color bands during the right-eye activation intervals 1181. When the left-eye image information is received, the backlight control module 280 may activate the left-eye backlight module 270 to transmit the left-eye color bands during the left-eye activation intervals 1182.

The right-eye backlight module 260 and the left-eye backlight module 270 are only activated by the backlight control module 280 during the right-eye activation intervals 1181 or the left-eye activation intervals 1182, respectively. Depending on the required brightness of the respective image information, the right-eye backlight module 260 and the left-eye backlight module 270 may be activated for different durations during different respective activation intervals 1181 or 1182. For example, the right-eye backlight module 260 and the left-eye backlight module 270 may not be activated during a respective activation interval 1181 or 1182, may be activated for part of a respective activation interval 1181 or 1182, or may be activated for a full respective activation interval 1181 or 1182. The right-eye backlight module 260 and the left-eye backlight module 270 may also be activated more than once during a respective activation interval 1181 or 1182. These possibilities are illustrated in FIG. 11 by an exemplary right-eye switching sequence 1183 and an exemplary left-eye switching sequence 1184.

Furthermore, the right-eye backlight module 260 and the left-eye backlight module 270 for different parts of the LCD panel 130 may be activated for different durations during the same respective activation interval 1181 or 1182, enabling local dimming.

In instances where it is desired for the 3D color display 110 to function as a 2D color display, the backlight control module 280 may be set to activate the right-eye backlight module 260 and the left-eye backlight module 270 simultaneously or to activate only one of the right-eye backlight module 260 and the left-eye backlight module 270.

To further elucidate the present invention, several exemplary, preferred embodiments of the backlight 140 are described hereafter.

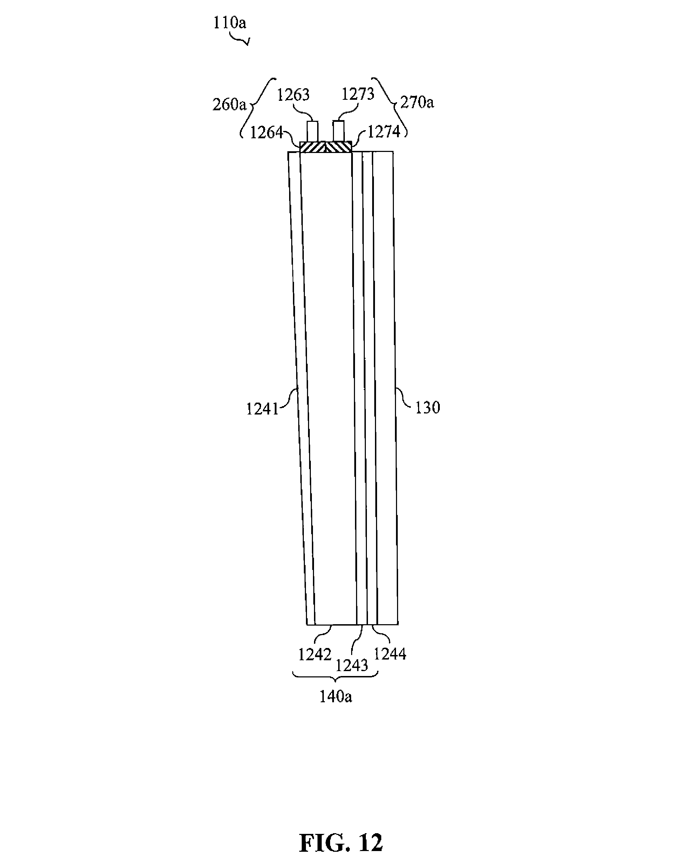

With reference to FIG. 12, a first preferred embodiment of the backlight 140a for an edge-lit LCD panel 130 in a 3D color display 110a comprises a right-eye backlight module 260a and a left-eye backlight module 270a. The right-eye backlight module 260a includes white LEDs, RGB LEDs, or RGB solid-state lasers as right-eye light sources 1263, and one or more triple-bandpass filters, double-bandpass filters, or sets or red, blue, and green single-bandpass filters as one or more right-eye color filters 1264. Likewise, the left-eye backlight module 270a includes white LEDs, RGB LEDs, or RGB solid-state lasers as a left-eye light sources 1273, and one or more triple-bandpass filters, double-bandpass filters, or sets or red, blue, and green single-bandpass filters as one or more left-eye color filters 1274.

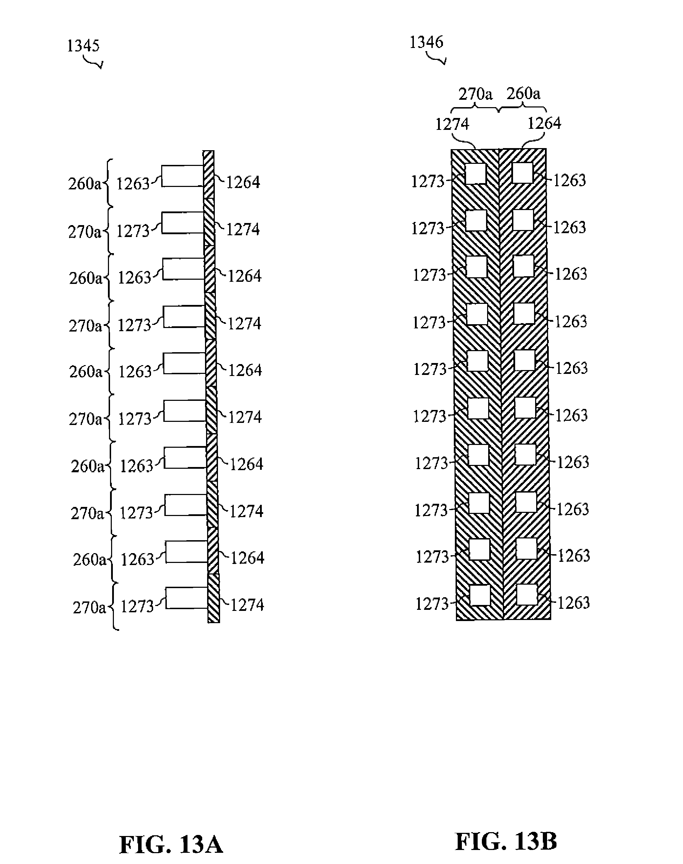

The backlight 140a further comprises a mirror 1241, a tapered light guide 1242, a diffuser 1243, and a prism film 1244. The tapered light guide 1242 is disposed behind the LCD panel 130, and the right-eye backlight module 260a and the left-eye backlight module 270a are disposed beside the tapered light guide 1242. In particular, with reference to FIGS. 13A and 13B, the right-eye backlight module 260a and the left-eye backlight module 270a are disposed in an alternating pattern, such as a checkerboard pattern 1345 or a parallel pattern 1346, with their front surfaces at a side surface of the tapered light guide 1242. That is, right-eye and left-eye groups of one or more white LEDs, RGB LEDs, or RGB solid-state lasers are disposed in an alternating pattern, and the right-eye and left-eye triple-bandpass filters, double-bandpass filters, or sets of red, green, and blue single-bandpass filters are disposed in front of the right-eye and left-eye groups in a corresponding alternating pattern. The mirror 1241 is disposed behind the tapered light guide 1242, and the diffuser 1243 and the prism film 1244 are disposed in front of the tapered light guide 1242.

Thus, the right-eye and left-eye color bands transmitted by the right-eye backlight module 260a and the left-eye backlight module 270a, respectively, are received by the tapered light guide 1242. The tapered light guide 1242 guides the right-eye and left-eye color bands, via the diffuser 1243 and the prism film 1244, to the LCD panel 130, ensuring that the right-eye and left-eye color bands are uniformly distributed over a back surface of the LCD panel 130. The diffuser 1243 aids to homogenize the distribution of the right-eye and left-eye color bands, and the prism film 1244 serves to align the right-eye and left-eye color bands perpendicularly to the LCD panel 130. The mirror 1241 inhibits transmission losses from a back surface of the tapered light guide 1242.

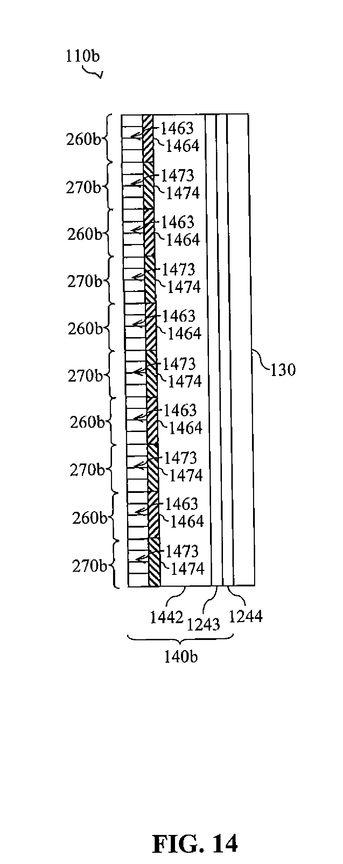

With reference to FIG. 14, a second preferred embodiment of the backlight 140b for a back-lit LCD panel 130 in a 3D color display 110b comprises a right-eye backlight module 260b and a left-eye backlight module 270b. The right-eye backlight module 260b includes white LEDs, RGB LEDs, or RGB solid-state lasers as right-eye light sources 1463, and triple-bandpass filters, double-bandpass filters, or sets or red, blue, and green single-bandpass filters as right-eye color filters 1464. The left-eye backlight module 270b includes white LEDs, RGB LEDs, or RGB solid-state lasers as left-eye light sources 1473, and triple-bandpass filters, double-bandpass filters, or sets or red, blue, and green single-bandpass filters as left-eye color filters 1474.

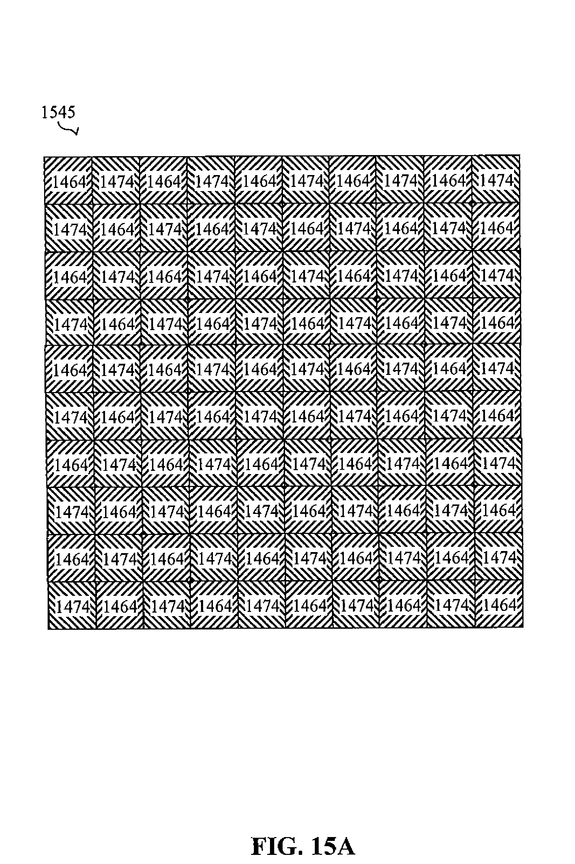

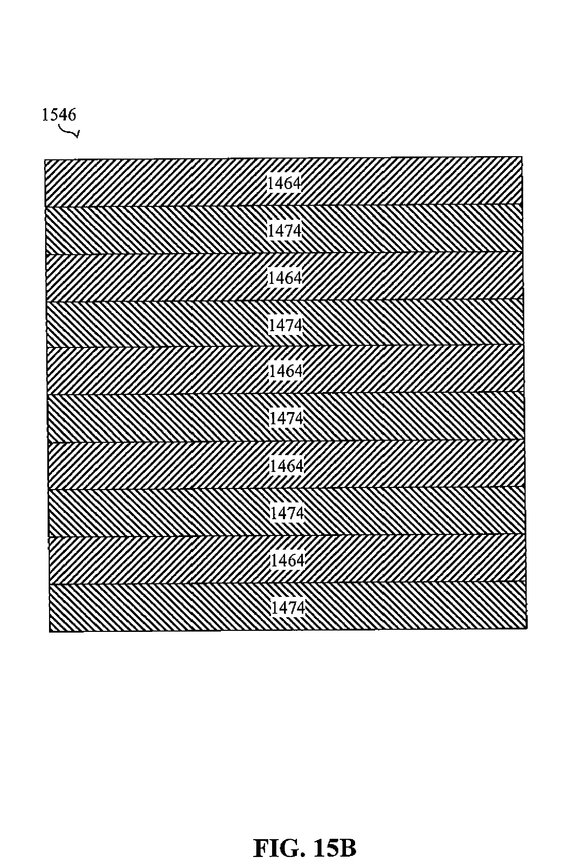

The backlight 140b further comprises a planar light guide 1442, in addition to the diffuser 1243 and the prism film 1244 of the first preferred embodiment. The planar light guide 1442 is disposed behind the LCD panel 130, and the right-eye backlight module 260b and the left-eye backlight module 270b are disposed behind the planar light guide 1442. In particular, with reference to FIGS. 15A and 15B, the right-eye backlight module 260b and the left-eye backlight module 270b are disposed in an alternating pattern, such as a checkerboard pattern 1545 or a parallel pattern 1546, with their front surfaces at a back surface of the planar light guide 1442. That is, right-eye and left-eye groups of one or more white LEDs, RGB LEDs, or RGB solid-state lasers are disposed in an alternating pattern, and the right-eye and left-eye triple-bandpass filters, double-bandpass filters, or sets of red, green, and blue single-bandpass filters are disposed in front of the right-eye and left-eye groups in a corresponding alternating pattern.

Thus, the right-eye and left-eye color bands transmitted by the right-eye backlight module 260b and the left-eye backlight module 270b are received by the planar light guide 1442. The planar light guide 1442 guides the right-eye and left-eye color bands via the diffuser 1243 and the prism film 1244 to the LCD panel 130, ensuring that the right-eye and left-eye color bands are uniformly distributed over the back surface of the LCD panel 130.

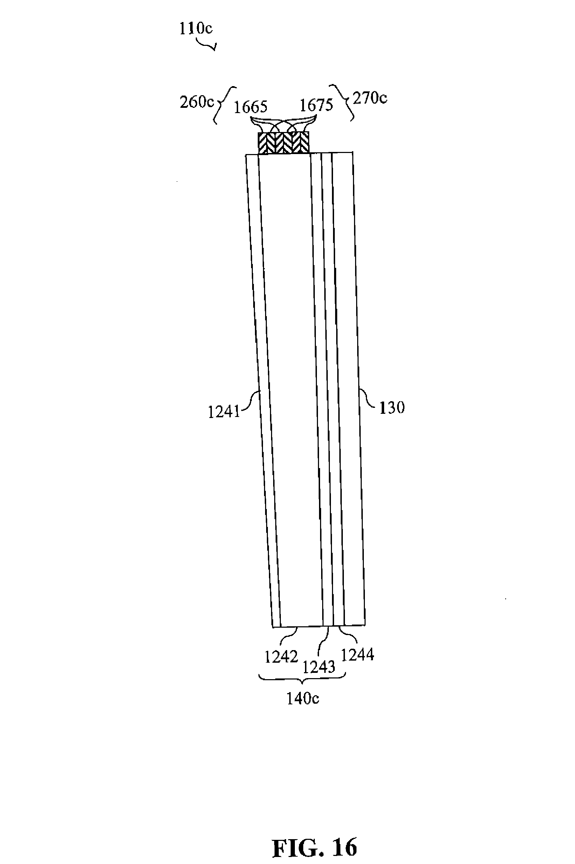

With reference to FIG. 16, a third preferred embodiment of the backlight 140c for an edge-lit LCD panel 130 in a 3D color display 110c comprises a right-eye backlight module 260c and a left-eye backlight module 270c. The right-eye backlight module 260c includes red LEDs or solid-state lasers, green LEDs or solid-state lasers, and blue LEDs or solid-state lasers as right-eye color light sources 1665. The left-eye backlight module 270c includes red LEDs or solid-state lasers, green LEDs or solid-state lasers, and blue LEDs or solid-state lasers as left-eye color light sources 1675.

The backlight 140c further comprises the mirror 1241, the tapered light guide 1242, the diffuser 1243, and the prism film 1244 of the first preferred embodiment. The right-eye backlight module 260c and the left-eye backlight module 270c are disposed beside the tapered light guide 1242. In particular, the right-eye backlight module 260c and the left-eye backlight module 270c are disposed in an alternating pattern, such as a checkerboard pattern or a parallel pattern, with their front surfaces at the side surface of the tapered light guide 1242. That is, right-eye and left-eye groups of one or more red LEDs or solid-state lasers, one or more green LEDs or solid-state lasers, and one or more blue LEDs or solid-state lasers are disposed in an alternating pattern.

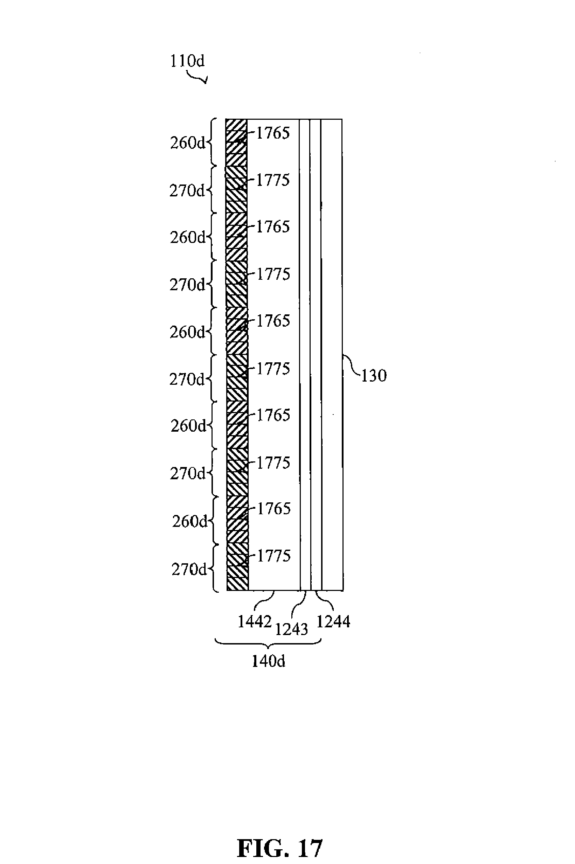

With reference to FIG. 17, a fourth preferred embodiment of the backlight 140d for a back-lit LCD panel 130 in a 3D color display 110d comprises a right-eye backlight module 260d and a left-eye backlight module 270d. The right-eye backlight module 260d includes red LEDs or solid-state lasers, green LEDs or solid-state lasers, and blue LEDs or solid-state lasers as narrow-band right-eye color light sources 1765. The left-eye backlight module 270d includes red LEDs or solid-state lasers, green LEDs or solid-state lasers, and blue LEDs or solid-state lasers.

The backlight 140d further comprises the planar light guide 1442 of the second preferred embodiment, in addition to the diffuser 1243 and the prism film 1244 of the first preferred embodiment. The right-eye backlight module 260d and the left-eye backlight module 270d are disposed behind the planar light guide 1442. In particular, the right-eye backlight module 260d and the left-eye backlight module 270d are disposed in an alternating pattern, such as a checkerboard pattern or a parallel pattern, with their front surfaces at the back surface of the planar light guide 1442. That is, right-eye and left-eye groups of one or more red LEDs or solid-state lasers, one or more green LEDs or solid-state lasers, and one or more blue LEDs or solid-state lasers are disposed in an alternating pattern.

With reference again to FIG. 1, the 3D color display system 100 also comprises the passive 3D color eyeglasses 120 for viewing the right-eye and left-eye images produced by the 3D color display 110 as 3D color images. The 3D color eyeglasses 120 include a right-eye color-filter eyeglass 121 for transmitting the right-eye color bands to present the right-eye images to a viewer's right eye while blocking the left-eye color bands. The 3D color eyeglasses 120 also include a left-eye color-filter eyeglass 122 for transmitting the left-eye color bands to present the left-eye images to the viewer's left eye while blocking the right-eye color bands.

Preferably, the right-eye color-filter eyeglass transmits greater than 75 % of the right-eye color bands and less than 5 % of the left-eye color bands. More preferably, the right-eye color-filter eyeglass transmits greater than 80 % of the right-eye color bands and less than 2 % of the left-eye color bands. Most preferably, the right-eye color-filter eyeglass transmits greater than 90 % of the right-eye color bands and less than 1 % of the left-eye color bands.

Likewise, the left-eye color-filter eyeglass, preferably, transmits greater than 75 % of the left-eye color bands and less than 5 % of the right-eye color bands. More preferably, the left-eye color-filter eyeglass transmits greater than 80 % of the left-eye color bands and less than 2 % of the right-eye color bands. Most preferably, the left-eye color-filter eyeglass transmits greater than 90 % of the left-eye color bands and less than 1 % of the right-eye color bands.

Typically, the right-eye color-filter eyeglass 121 and the left-eye color-filter eyeglass 122 are interference filters. Preferably, the right-eye color-filter eyeglass 121 and the left-eye color-filter eyeglass 122 are triple-bandpass filters.

For example, with reference to FIG. 7, the right-eye color-filter eyeglass 121 may be a triple-bandpass filter having the first right-eye passband spectrum 761 described heretofore for transmitting the first right-eye transmission spectrum 561. Accordingly, the left-eye color-filter eyeglass 122 may be a triple-bandpass filter having the first left-eye passband spectrum 771 described heretofore for transmitting the first left-eye transmission spectrum 571.

Alternatively, the right-eye color-filter eyeglass 121 and the left-eye color-filter eyeglass 122 may be double-bandpass filters.

For example, with reference to FIG. 8, the right-eye color-filter eyeglass 121 may be a double-bandpass filter having the second right-eye passband spectrum 861 described heretofore for transmitting the second right-eye transmission spectrum 661. Accordingly, the left-eye color-filter eyeglass 122 may be a double-bandpass filter having the second left-eye passband spectrum 871 described heretofore for transmitting the second left-eye transmission spectrum 671.

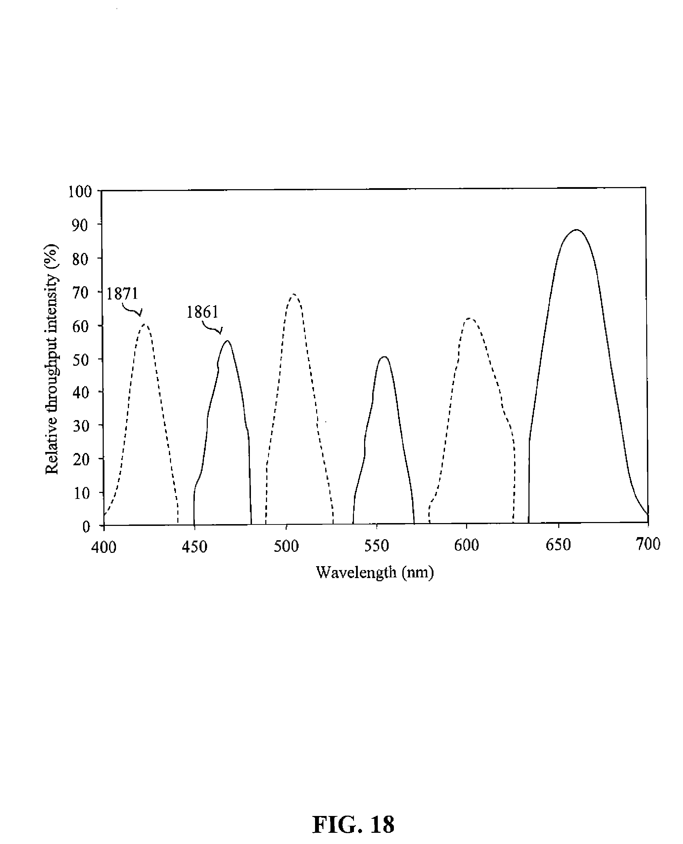

With reference to FIG. 18, a right-eye throughput spectrum 1861 and a left-eye throughput spectrum 1871 characterize the performance of an exemplary embodiment of the 3D color display system 100. In the exemplary embodiment, right-eye and left-eye color bands were emitted by right-eye or left-eye color light sources having the first right-eye or left-eye emission spectrum 961 or 971, respectively, and then passed through RGB subpixel filters having the RGB transmission spectrum 437, followed by a right-eye or left-eye color-filter eyeglass 121 or 122 having the first right-eye or left-eye passband spectrum 761 or 771, respectively.

The right-eye throughput spectrum 1861 shows the relative throughput intensities, i.e. the intensities received relative to the intensities emitted, of right-eye color bands received by a viewer's right eye, and the left-eye throughput spectrum 1871 shows the relative throughput intensities of left-eye color bands received by the viewer's left eye. Preferably, the relative throughput intensities of the right-eye and left-eye color bands received by the viewer's right and left eye, respectively, are greater than 50 %. More preferably, the relative throughput intensities are greater than 75 %. Ideally, the relative throughput intensities are greater than 90 %.

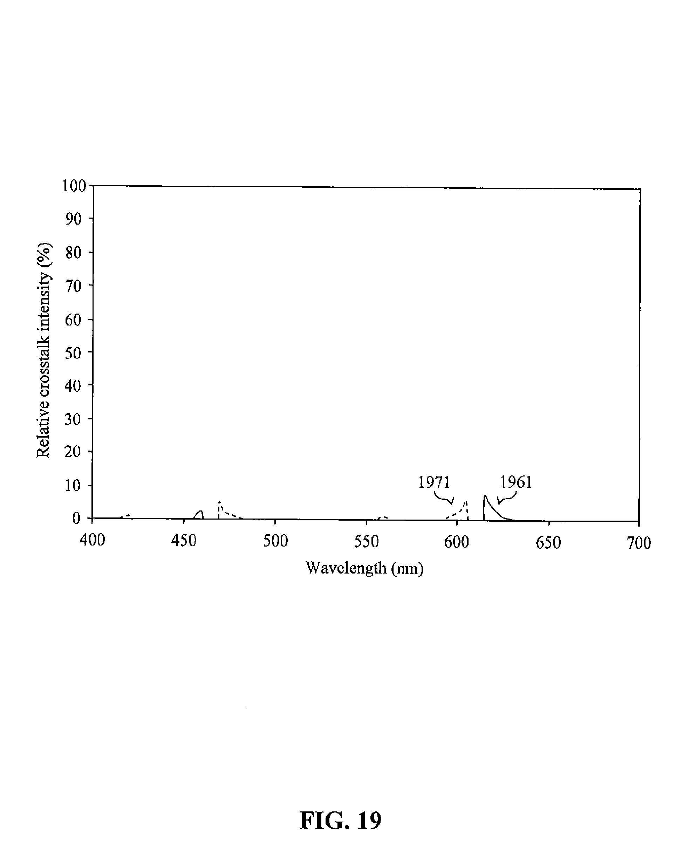

With reference to FIG. 19, a right-eye crosstalk spectrum 1961 and a left-eye crosstalk spectrum 1971 also characterize the performance of the exemplary embodiment of the 3D color display system 100. The right-eye crosstalk spectrum 1961 shows the relative crosstalk intensities, i.e. the intensities received relative to the intensities emitted, of the left-eye color bands received by a viewer's right eye, and the left-eye crosstalk spectrum 1971 shows the relative crosstalk intensities of the right-eye color bands received by a viewer's left eye. Preferably, the relative crosstalk intensities of the right-eye and left-eye color bands received by the viewer's left and right eye, respectively, are less than 20 %. More preferably, the relative crosstalk intensities are less than 10 %. Ideally, the relative crosstalk intensities are less than 5%.

It is also desirable that the signal-to-noise ratios, i.e. the ratios of the throughput intensities relative to the crosstalk intensities, of the right-eye and left-eye color bands received by the viewer's right and left eye, respectively, be greater than 50:1. Preferably, the signal-to-noise ratios are greater than 100:1. More preferably, the signal-to-noise ratios are greater than 300:1.

Of course, numerous other embodiments of the backlight 140 and the 3D color display system 100 provided by the present invention may be envisaged without departing from the spirit and scope of the invention.

## Claims

1. A three-dimensional (3D) color display system comprising:
a 3D color display including:
a liquid-crystal display (LCD) panel for producing right-eye images and left-eye images in alternation at a refresh rate; and
a backlight comprising:
a right-eye backlight module for transmitting, upon activation, a right-eye first-color band, a right-eye second-color band, and a right-eye third-color band, from which the right-eye images are produced, to the LCD panel;
a left-eye backlight module for transmitting, upon activation, a left-eye first-color band spectrally distinct from the right-eye color bands, a left-eye second-color band spectrally distinct from the right-eye color bands, and a left-eye third-color band spectrally distinct from the right-eye color bands, from which the left-eye images are produced, to the LCD panel;
and
a backlight control module for activating the right-eye backlight module during right-eye activation intervals and the left-eye backlight module during left-eye activation intervals, the right-eye activation intervals and the left-eye activation intervals alternating at a switching rate.

2. The 3D color display system of claim 1, wherein the right-eye color bands and the left-eye color bands have spectral widths of less than 100 nm.

3. The 3D color display system of claim 1 or 2,
wherein the right-eye backlight module includes:
one or more right-eye light sources for emitting light including the right-eye color bands; and
one or more right-eye color filters for transmitting the right-eye color bands to the LCD panel and for blocking the left-eye color bands; and
wherein the left-eye backlight module includes:
one or more left-eye light sources for emitting light including the left-eye color bands; and
one or more left-eye color filters for transmitting the left-eye color bands to the LCD panel and for blocking the right-eye color bands.

4. The 3D color display system of claim 3, wherein the one or more right-eye light sources are arranged in one or more right-eye groups of one or more right-eye light sources, wherein the one or more left-eye light sources are arranged in one or more left-eye groups of one or more left-eye light sources, wherein the one or more right-eye groups and the one or more left-eye groups are disposed in an alternating pattern, and wherein the one or more right-eye color filters and the one or more left-eye color filters are disposed in front of the one or more right-eye groups and the one or more left-eye groups in a corresponding alternating pattern.

5. The 3D color display system of claim 3 or 4, wherein the one or more right-eye light sources and the one or more left-eye light sources are white light-emitting diodes (LEDs), red, green, blue (RGB) LEDs, or RGB solid-state lasers.

6. The 3D color display system of any one of claims 3 to 5, wherein the one or more right-eye color filters and the one or more left-eye color filters are tliple-bandpass filters, double-bandpass filters, or sets of red, green, and blue single-bandpass filters.

7. The 3D color display system of claim 1 or 2,
wherein the right-eye backlight module includes:
one or more right-eye first-color light sources for emitting only the right-eye first-color band and for transmitting the right-eye first-color band to the LCD panel;
one or more right-eye second-color light sources for emitting only the right-eye second-color band and for transmitting the right-eye second-color band to the LCD panel; and
one or more right-eye third-color light sources for emitting only the right-eye third-color band and for transmitting the right-eye third-color band to the LCD panel; and
wherein the left-eye backlight module includes:
one or more left-eye first-color light sources for emitting only the left-eye first-color band and for transmitting the left-eye first-color band to the LCD panel;
one or more right-eye second-color light sources for emitting only the left-eye second-color band and for transmitting the left-eye second-color band to the LCD panel; and
one or more right-eye third-color light sources for emitting only the left-eye third-color band and for transmitting the left-eye third-color band to the LCD panel.

8. The 3D color display system of claim 7, wherein the right-eye color light sources are arranged in one or more right-eye groups of one or more right-eye first-color light sources, one or more right-eye second-color light sources, and one or more right-eye third-color light sources;
wherein the left-eye color light sources are arranged in one or more left-eye groups of one or more left-eye first-color light sources, one or more left-eye second-color light sources, and one or more left-eye third-color light sources; and wherein the one or more right-eye groups and the one or more left-eye groups are disposed in an alternating pattern.

9. The 3D color display system of claim 7 or 8, wherein the one or more right-eye first-color light sources and the one or more left-eye first-color light sources are red LEDs or red solid-state lasers, wherein the one or more right-eye second-color light sources and the one or more left-eye second-color light sources are green LEDs or green solid-state lasers, and wherein the one or more right-eye third-color light sources and the one or more left-eye third-color light sources are blue LEDs or blue solid-state lasers.

10. The 3D color display system of any one of claims 1 to 9, wherein the switching rate is synchronized to the refresh rate.

11. The 3D color display system of any one of claims 1 to 10, wherein the LCD panel is edge-lit by the backlight; wherein the backlight further comprises a tapered light guide, disposed behind the LCD panel, for guiding the right-eye color bands and the left-eye color bands to the LCD panel; and wherein the right-eye backlight module and the left-eye backlight module are disposed beside the tapered light guide.

12. The 3D color display system of any one of claims 1 to 10, wherein the LCD panel is back-lit by the backlight; wherein the backlight further comprises a planar light guide, disposed behind the LCD panel, for guiding the right-eye color bands and the left-eye color bands to the LCD panel; and wherein the right-eye backlight module and the left-eye backlight module are disposed behind the planar light guide.

13. The 3D color display system of any one of claims 1 to 12, further comprising: 3D color eyeglasses including:
a right-eye color-filter eyeglass for transmitting the right-eye color bands to present the right-eye images to a viewer's right eye, and for blocking the left-eye color bands;
and
a left-eye color-filter eyeglass for transmitting the left-eye color bands to present the left-eye images to the viewer's left eye, and for blocking the right-eye color bands.

14. The 3D color display system of claim 13, wherein the right-eye color-filter eyeglass and the left-eye color-filter eyeglass are double-bandpass filters or triple-bandpass filters.

15. A backlight for an LCD panel in a 3D color display system, comprising:
a right-eye backlight module for transmitting a right-eye first-color band, a right-eye second-color band, and a right-eye third-color band, from which right-eye images are produced, to the LCD panel;
a left-eye backlight module for transmitting a left-eye first-color band spectrally distinct from the right-eye color bands, a left-eye second-color band spectrally distinct from the right-eye color bands, and a left-eye third-color band spectrally distinct from the right-eye color bands, from which left-eye images are produced, to the LCD panel; and
a backlight control module for activating the right-eye backlight module during right-eye activation intervals and the left-eye backlight module during left-eye activation intervals, the right-eye activation intervals and the left-eye activation intervals alternating at a switching rate.
